Europäisches Patentamt

European Patent Office

Office européen des brevets

(19)

(11) Publication number: **0 080 370**
**B1**

(12) **EUROPEAN PATENT SPECIFICATION**

(45) Date of publication of patent specification: **04.11.87**        (51) Int. Cl.⁴: **F 16 K 3/02**

(21) Application number: **82306234.4**

(22) Date of filing: **23.11.82**

(54) **Control valve for flow of solids.**

| | |
|---|---|
| (30) Priority: **23.11.81 US 324175** | (73) Proprietor: **Tapco International, Inc.**<br>**100 West Tenth Street**<br>**Wilmington, Delaware 19801 (US)** |
| (43) Date of publication of application:<br>**01.06.83 Bulletin 83/22** | (72) Inventor: **Jandrasi, Frank J.**<br>**13331 Balmore Circle**<br>**Houston Texas 77069 (US)** |
| (45) Publication of the grant of the patent:<br>**04.11.87 Bulletin 87/45** | Inventor: **Ringle, Eric P.**<br>**4107 Windrift Drive**<br>**Houston Texas 77066 (US)** |
| (84) Designated Contracting States:<br>**DE FR GB IT** | (74) Representative: **Lucas, Brian Ronald et al**<br>**Lucas, George & Co. 135 Westhall Road**<br>**Warlingham Surrey CR3 9HJ (GB)** |
| (56) References cited:<br>**DE-A-2 744 268**<br>**US-A-2 636 712**<br>**US-A-3 976 094** | |

Courier Press, Leamington Spa, England.

## Description

The present invention is directed to a control valve for flow of solids which controls the volume of flow over a full range and provides a full opening for solids dumping.

The control valve according to the invention is one which is capable of handling the flow of solid and semi-solid material, highly erosive in nature, in temperature ranges from ambient to 200°F (ca. 95°C) and higher. Such valves find applications in processes handling cold slurries, such as liquefaction or gasification, processes handling raw shale such as the extraction of shale oil, and for handling similar erosive materials such as the catalysts used in refining of crude oil. Numerous designs of slide valves have been suggested and used for such solids flow; however, these valves have not been entirely satisfactory since they are not control valves in the true sense in that they are designed to modulate over a narrow flow range, rather than a full controlled range, and they are not capable of providing full pipe opening for solids dumping. The present invention overcomes these disadvantages and provides controlled flow over a full range, closing and complete opening for dumping of solids buildup.

DE—A—2744268 discloses a slide valve for regulating the flow of fluids, comprising a body provided with a flow passage therethrough, an orifice plate removably secured in the flow passage, a pair of slides disposed adjacent to and downstream of the orifice plate and relatively moveable toward and away from one another to a closed position and to an open position, respectively operable to close and to open the flow passage.

According to the present invention there is provided a flow control valve including a body provided with a flow passage therethrough, a valve orifice plate removably secured in the flow passage and a pair of slides disposed adjacent to and downstream of the orifice plate and relatively moveable toward and away from one another between a closed position and an open position, characterized in that the slides overlap one another and/or have interfitting portions which mate with one another, and in that a control port is provided in one of said overlapping and/or mating interfitting portions in such a manner that with said slides in said closed position the port in the overlapping and/or interfitting portion of one slide is closed by the overlapping and/or interfitting portion of the other slide and as the slides move away from each other toward said open position the overlapping and/or interfitting portion of said other slide progressively exposes the port in the overlapping and/or interfitting portion of said one slide.

The said slides can either overlap and have the control port in the upstream or downstream slides, and/or the slides can abut one another and have interfitting portions to control the volume of flow in the flow passage. An exit liner can be removably secured in the flow passage downstream of and adjacent to the pair of slides operative to center flow downstream of the orifice, and guides are provided for guiding the slides, the guides and slides having interfitting tongues and grooves. The guides advantageously have a spaced portion at the flow passage so that any buildup or bridging of solids in the guides is cleared by the closing of the slides.

The tongues and grooves of the guides and slides are disposed out of the direct flow through the flow passage and, preferably, a flow centering member is provided upstream of the orifice for centering the flow through the orifice. Also, the orifice, slides, guide and exit liner are all removable from the valve through the bonnet opening without removing the valve from the line.

An embodiment of the present invention which will be described hereinafter comprises a valve adapted to control the volume of flow of solids throughout a full range from a fully open to a closed position. The valve includes slides at least one of which has a control port for controlling the volume of flow through the valve, and means for centering the flow of erosive solids through the valve. More particularly, a pair of slides and guides having interfitting tongues and grooves are provided, the guides having a space between them at or adjacent the flow passage so that the guides are cleared of any buildup of solids as the slides are moved to a closed position. Wear prone parts of the valve can be removed for repair or replacement without removing the valve from the line.

Features and advantages of the invention will be apparent from the following description of presently preferred embodiments of the invention given by way of example only when taken in conjunction with the accompanying drawings wherein:—

Figure 1 is an elevation in section of a control flow valve of the invention;

Figure 1A is a plan view of the control flow valve of Figure 1;

Figure 2 is a fragmentary view illustrating overlapping slides of the invention in closed position;

Figure 2A is a view of the overlapping slides in flow control and in open or clearing positions;

Figure 3 is a fragmentary view of interlocking slides in a closed position;

Figure 3A illustrates the interlocking slides in flow control and in clearing or open positions;

Figure 4 is a fragmentary perspective view illustrating self-cleaning guides for the interfitting tongues and grooves on the guides and slides;

Figure 5 is a view similar to Figure 2 illustrating a modified form of the control port;

Figure 5A is a view similar to Figure 5 illustrating a further modification of the control port;

Figure 5B is a view similar to Figure 5 illustrating a still further modification of the control port;

Figure 5C is a view similar to Figure 3 illustrating a modification of the control port;

Figure 6 is a view similar to Figure 2 illustrating a still further modification of the control port;

Figure 6A is a view similar to Figure 6 illustrating a further modification of the control port; and

Figure 6B is a view similar to Figure 6 illustrating a still further modification of the control port.

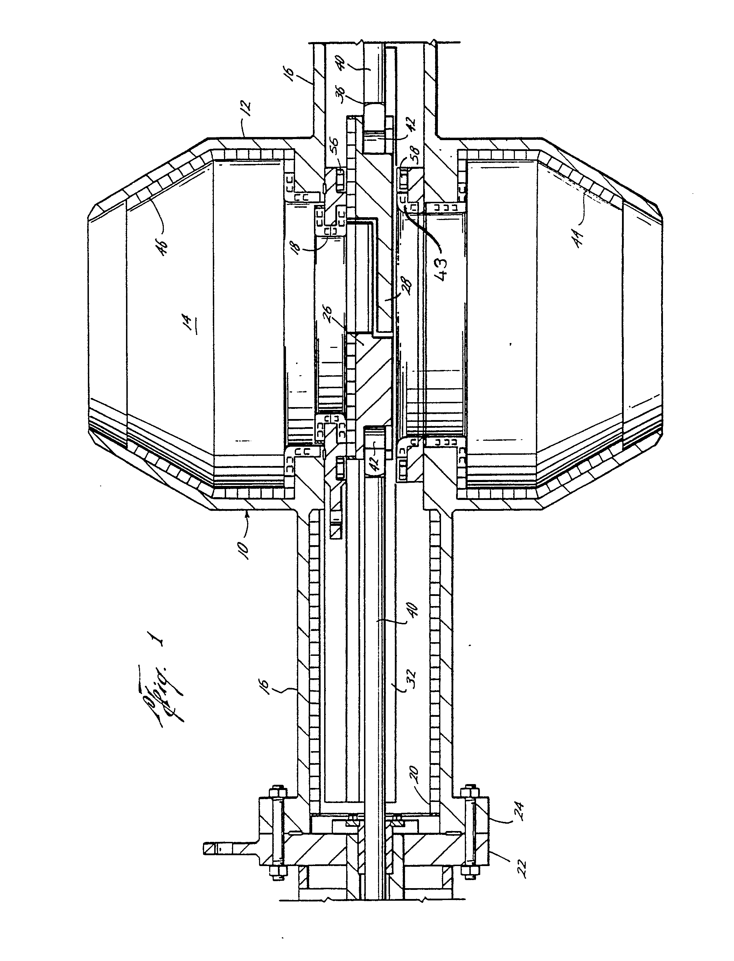

Referring now to the drawings, and particularly to Figures 1 and 1A, the reference numeral 10 generally designates the control valve which includes the body 12 having a flow passage 14 through it, an internal chamber 16, and an orifice plate 18 at the entrance to the chamber 16. The chamber 16 has the opening 20 which is closed by the bonnet or cover 22 releasably secured to the body 12 by the bolts 24.

The valve body 12 is the main pressure retaining unit of the valve and serves as a structural mount for the remaining valve components. The body can be either a hot shell design or a cold shell design, as desired. The hot shell design utilizes internal protection on the body walls for erosion only; whereas, the cold shell design utilizes the same erosion resistant refractory material backed by thermal resistant refractory material.

The body may be of fabricated or cast construction, utilizing various forms of steel plates, forgings or castings as required. Typical materials which can be used for the body 12 are carbon steel, such as SA516 for low temperature applications (up to about 900°F (ca. 485°C)), a low alloy steel such as SA387 for intermediate temperature applications (about 900°F to 1200°F (ca. 485°C to ca. 650°C)), and a high alloy steel, such as SA240 for high temperature applications (up to about 1500°F (ca. 820°C)). Applications in excess of 1500°F (ca. 820°C)) could utilize a cold shell design to reduce body design temperature to within one of the above ranges. Any desired materials which can withstand the condition of use, however, can be used for the body 12 and for erosion and temperatures encountered.

Disposed within the valve body 12 is a pair of slides 26 and 28, here shown as overlapping slides in closed position, which are disposed in the chamber 16 adjacent to and downstream of the orifice 18. Relatively movement of the slides 26 and 28 toward one another and away from one another positions them in a closed position, in a flow control position and in an open position, respectively, which is operable to close, regulate the volume of flow through and to open the flow passage 14 through the valve 10.

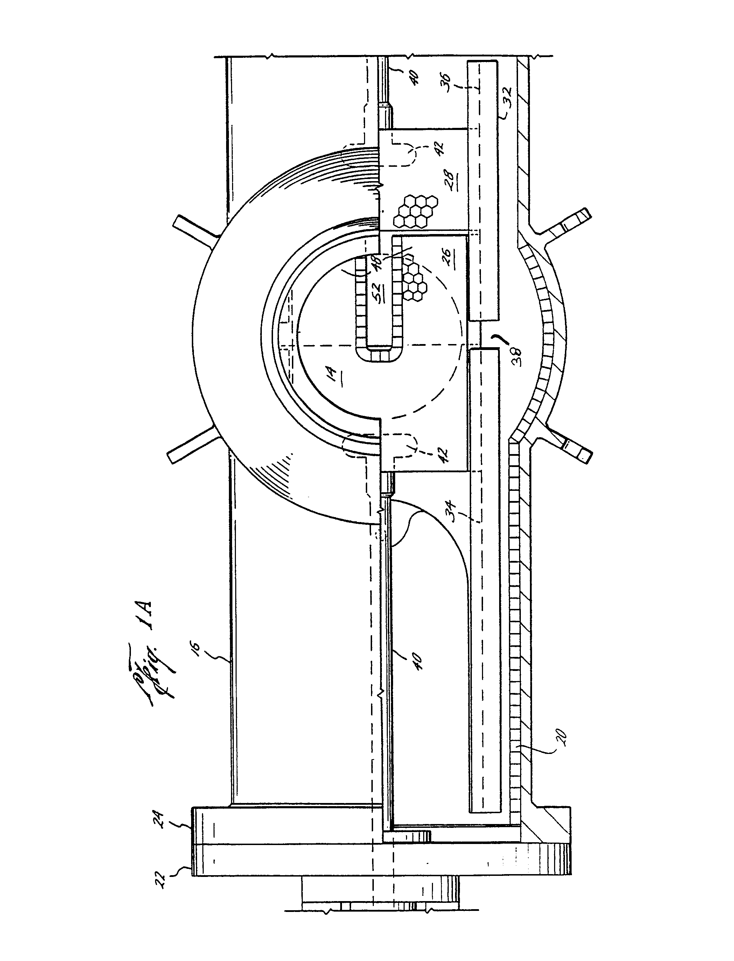

As best seen in Figure 2, the slides 26 and 28 have the tongues 30 on each side of the valve which are disposed in the chamber 16 and out of the direct flow path 14 through the valve 10.

As best seen in Figure 1A, guides 32 are disposed in the chamber 16 of the body and have guide slots 34 and 36 which interfit with the tongues 30 on the slides 26 and 28 so that the slides are moveably slideable toward and away from one another as previously described. If desired, of course, the tongues 30 and guide slots 34 and 36 can be reversed; that is the tongues can be on the guides 32 and the slots in the slides 26 and 28.

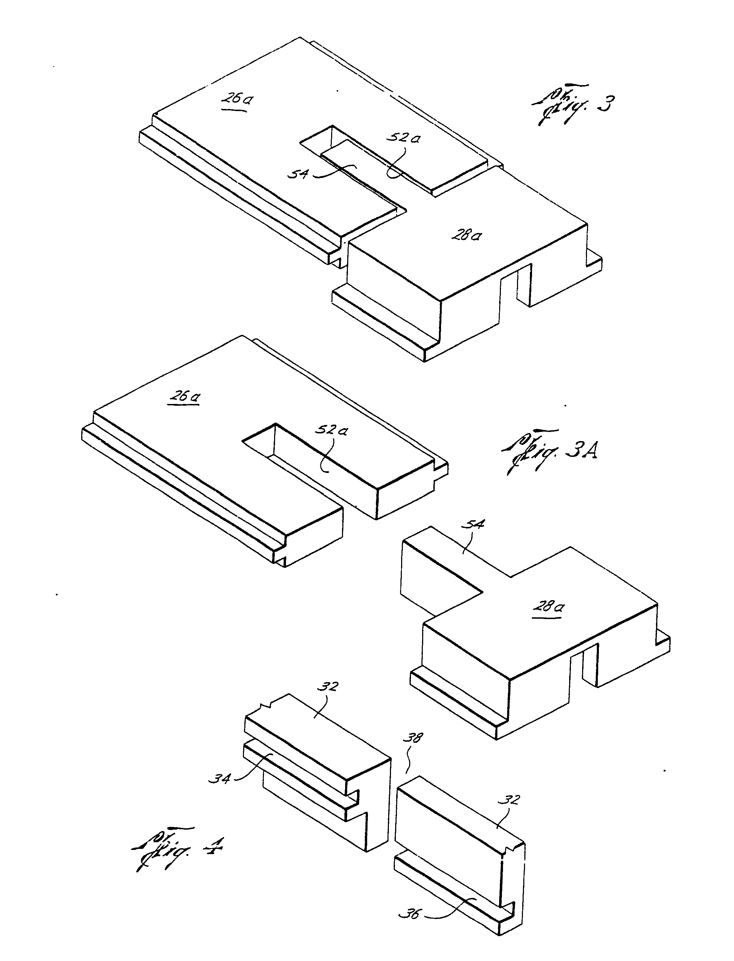

As best seen in Figure 4 a space 38 is provided between the guides 32 in the flow path 14 through the valve 10 and, preferably in the center portion, so that any buildup or bridging of solids in the slots 34 and 36 will be cleared by the closing action of the slides 26 and 28 moving toward one another. This buildup occurs when there is a wide variation in particle size of the solids flowing through the valve 10. Preferably this space or gap is about 1 inch to about 3 inch at the flow center line which effectively clears buildup of any solids in the slide grooves by the closing action of the slides.

Any suitable means may be provided for sliding one or both of the slides 26 and 28 into open, flow control and closed position; however, for most commercial operations, valves of the present invention are open and closed remotely as part of the valve system. As illustrated, actuator stems 40 are connected at 42 to each of the slides 26 and 28, which in turn can be connected through stuffing boxes, not shown, to a control actuating assembly of any desired type, such as electric or air operated motors, hydraulic or air operated cylinders, or manual gear boxes, and the like, none of which are shown since any suitable controls in the art can be used. Accordingly, no detailed description of such controls is given or deemed necessary.

Disposed adjacent to and immediately downstream of the slides 26 and 28 is the exit liner 43 which aids in centering flow in the flow passage 14 after it passes through the control port (as subsequently described) in the slides 26 and 28. The exit liner protects the downstream sides 44 of the valve body 12 from serious erosion which otherwise would shorten service life. Preferably, the exit liner 43 is disposed immediately adjacent to the slides 26 and 28 to prevent material from building up in the chamber 16. In this connection a conical extension of the downstream sides 44 is provided downstream of the exit liner 43 for centering flow.

Similarly, buildup in the upstream portion of the valve can be eliminated by providing a conical section 46 in the passageway of 14 to center flow in the upstream portion of the valve 10 which would eliminate buildup of solids in that portion of the valve.

If desired, and as illustrated, various portions of the valve may be insulated with a refractory material for erosion resistance and thermal resistance. Any desired refractory material can be used, many of which are available on the open market, such as Resco RS-7, Resco RA-22 and the like. Also, if desired, refractory material, such as hex mesh and refractory can be utilized.

Referring now to Figures 2 and 2A, the slides illustrated in Figures 1 and 2 have the overlapping portions 48 and 50 provided by cutting away complementary sections of each of them as illustrated. Disposed in one of the slides, here shown as the slide 26, although it can be disposed in the slide 28, is the control port 52, here shown as an elongate slot preferably in the center of the slide valve 26 for centering flow, although it may take a variety of shapes and be disposed in other portions of the slides 26 and 28. Thus, when the slides 26 and 28 abut one another, the control port 52 is closed by the other of the slides. As illustrated in Figure 2A, the dotted lines illustrate one position of the slides 26 and 28 showing the control port 52 partially open thereby controlling the rate or volume of flow through the control port. The slides 26 and 28 can be moved relative to one another, either both or one of them, to completely open the control port 52 and moved away from the flow passage so that the flow passage 14 is completely opened, or they can be moved any distance desired from one another to control the volume of flow through the valve 10.

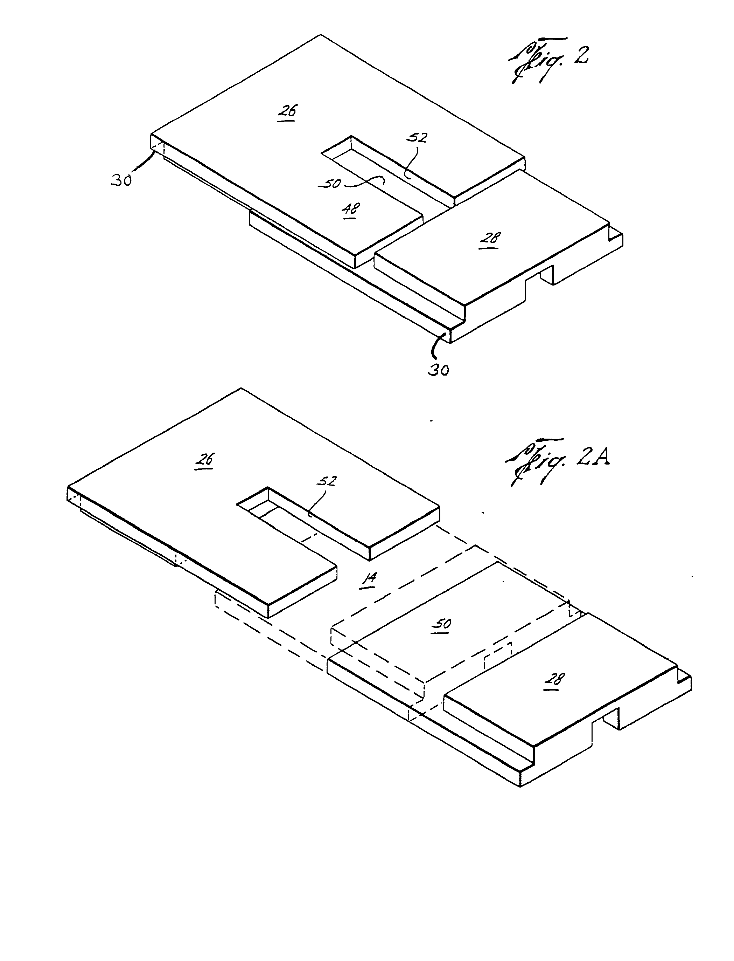

As previously mentioned, the control port 52 can take a variety of shapes and locations. Referring now to Figures 3 and 3A, a modified form of the control port is illustrated, in which the reference letter "a" has been added to numerals designating corresponding parts for convenience of reference. In this embodiment, the slides 26a and 28a interlock with one another, that is they generally abut one another in the closed position, and a projection 54 is provided on one of the slides, here shown as the slide 28a, to project into the control port 52a of the other of the slide, here shown as slide 26a. The other parts and the operation is the same as that described in connection with Figures 2 and 3A, in that movement of the slides 26a and 28a toward one another and in abutting relationship closes the slides, and movement of the slides 26a and 28a away from one another progressively opens the control port 52a until there is a full opening as previously described.

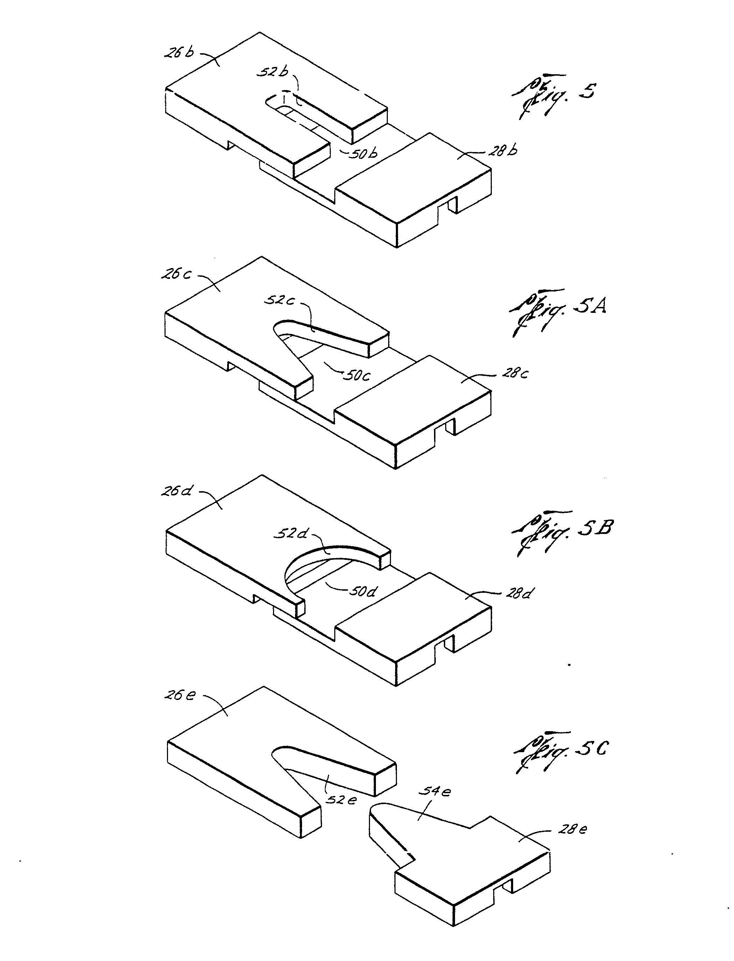

Referring now to Figure 5, a still further modification of the control port is illustrated, in which figure the reference letter "b" has been added to numerals designating corresponding parts in Figures 2 and 2A. This embodiment is substantially the same as that illustrated in those figures except that a rectangular slot 52b is illustrated having rounded inner corners.

A still further modification is illustrated in Figure 5A, to which reference is now made, in which the reference letter "c" has been aded to numerals designating parts corresponding to those in Figures 2 and 2A. The control port 52c shown here is triangularly shaped rather than an elongate slot or rectangular.

Referring now to Figure 5B in which the reference letter "d" has been added to numerals designating like parts in Figures 2 and 2A, a generally rounded control port 52d is illustrated.

Referring now to Figure 5C, a further embodiment is illustrated in which the reference letter "e" has been added to numerals designating like parts in Figures 3 and 3A. The control port 52e and projection 54e are generally triangularly shaped.

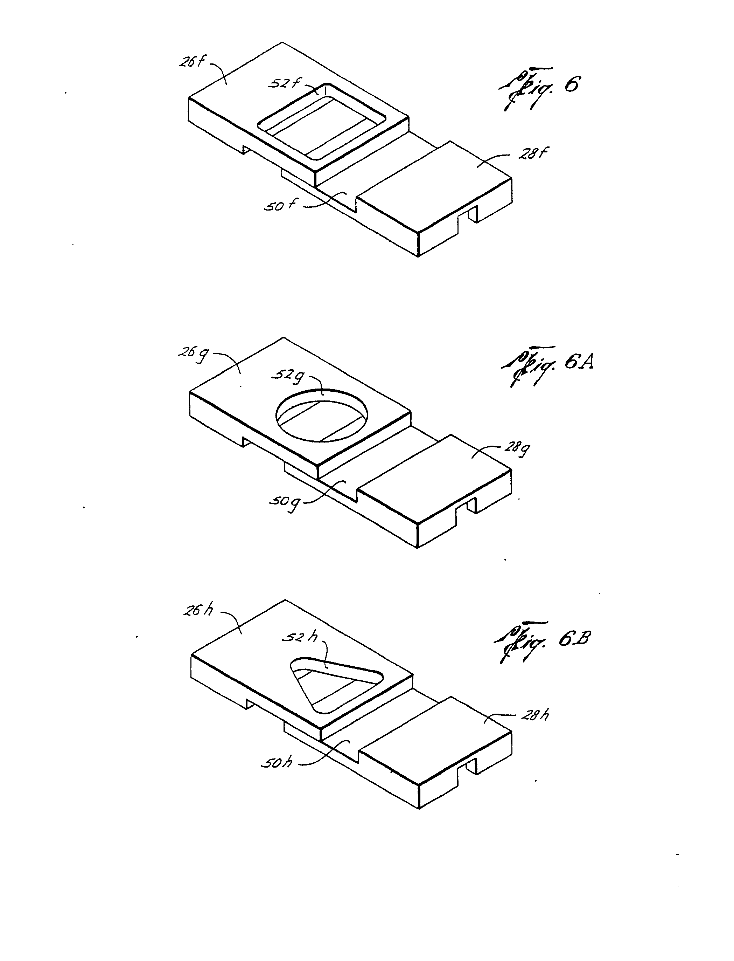

Referring now to Figures 6, 6A, and 6B, further modifications of the control port are illustrated in which the reference letters "f", "g" and "h" have been added, respectively, to numerals designating like parts in Figures 2 and 2A. As shown in these figures, the control port is generally completely enclosed in one of the slides, here shown in a rectangular configuration 52f in Figure 6, a round configuration 52g in Figure 5A, and a triangular configuration 52h in Figure 6B.

Thus, the control port can take a variety of shapes and be positioned in a variety of places depending upon the particular use and circumstances of use and as desired.

For convenience of disclosure, other parts, such as the tongues, etc. have been omitted; however, the other parts and the operation of the control ports illustrated in Figures 5, 5A, 5B, 5C, 6, 6A, and 6B are the same as described in connection with Figures 2, 2A, 3 and 3A so that the valve can be closed, opened for a desired volume of flow, and completely open, as previously described.

By the control port arrangements illustrated, the volume of flow through the valve 10 can be varied, fully opened or closed by varying the position of one or both of the slides 26 and 28. In reducing or shutting off flow, these slides can be closed separately or simultaneously. If desired, and as illustrated, the surfaces of the slides 26 and 28 can be covered with a refractory material, as described, in order to withstand erosions and/or temperatures encountered in flow of solids through the valve 10.

Preferably, the orifice 18, exit liner 43 and the guides 32 are releasably secured in the flow valve 10, such as in the chamber 16 and by the bolts 56 and 58, respectively, and by means not shown for the guides 32. The botton opening 20 in the chamber 16 is sufficiently large enough so that all of these parts can be removed for repair and/or replacement through the opening 20 by means of simply removing the cover 22 so that it is unnecessary to remove the valve from the line for repair and replacement of these wear prone parts.

In operation, the valve 10 is connected in a solid flow line by any suitable means, now shown, and flow through the valve 10 is controlled by the position of the slides 26 and 28 relative to one another. As previously mentioned, either one or both of the slides can be moved, and the size of the control port opening increased and decreased by this movement. In addition, the control valve can be closed or it can be fully open to dump any buildup or bridging of solids, and the coacting tongues and grooves in the guides and slides are self-cleaning simply by closing the slides.

Also, if desired the valve 10 can be reversed in use, so that the direction of flow through it is reversed. In addition, while the valve 10 is particularly suited for use with flow of solids, it is useful for controlling flows of fluids.

**Claims**

1. A flow control valve (10) including, a body (12) provided with a flow passage (14) therethrough, a valve orifice plate (18) removably secured in the flow passage and a pair of slides (26, 28) disposed adjacent to and downstream of the orifice plate and relatively moveable toward and away from one another between a closed position and an open position, characterized in that the slides (26, 28) overlap one another and/or have interfitting portions which mate with one another, and in that a control port (52) is provided in one of said overlapping and/or mating interfitting portions in such manner that with said slides in said closed position the port (52) in the overlapping and/or interfitting portion of one slide is closed by the overlapping and/or interfitting portion of the other slide and as the slides move away from each other toward said open position the overlapping and/or interfitting portion of said other slide progressively exposes the port (52) in the overlapping and/or interfitting portion of said one slide.

2. A flow control valve according to claim 1, characterized in that the control port is an elongate slot (52) in one of the slides and is closeable and openable by an overlapping portion (50) and/or by a complementary projection (54) in the other of the slides.

3. A flow control valve according to claim 1 or claim 2, characterized in that an exit liner (43) is removably secured in the flow passage downstream of and adjacent to the pair of slides operative to center flow downstream of the orifice.

4. A flow control valve according to claim 1, characterized in that the control port is completely contained in one of the slides.

5. A flow control valve according to claim 3, characterized in that guides (32) in the body (12) support the slides by cooperating tongues (30) and slots (34, 36) and in that a space (38) is provided between the guides (32) at the flow passage whereby closing of the slides clears any buildup of solids in the guides.

6. A flow control valve according to claim 5, characterized in that the guides comprise a separate guide for each of the slides.

7. A flow control valve according to claim 5, characterized in that the orifice plate (18), the guides (32) and the exit liner (43) are all releasably secured in place, in that a chamber (16) within the body has an opening (20) of a size sufficient for removal of the guides, the slide valves, the exit liner and the valve orifice therethrough, and in that a cover (22) releasably covers the opening.

8. A flow control valve according to claim 7, characterized in that a truncated conical section (46) is disposed in the flow passage upstream of and adjacent to the valve orifice operative to prevent buildup of solids in an upstream portion of the flow passage.

**Patentansprüche**

1. Durchflußregelventil (10), welches einen Körper (12), der mit einem Strömungsdurchgang (14) ausgestattet ist, eine Ventilöffnungsplatte (18), die in dem Strömungsdurchgang herausnehmbar befestigt ist, und ein paar Gleitstücke (26, 28) umfaßt, die benachbart zur und stromabwärts der Öffnungsplatte angeordnet sind und relativ zueinander und voneinander weg zwischen einer geschlossenen Stellung und einer offenen Stellung beweglich sind, dadurch gekennzeichnet, daß die Gleitstücke (26, 28) miteinander überlappen und/oder ineinanderpassende Abschnitte aufweisen, die zueinander passen, und daß eine Regelöffnung (52) in einem der überlappenden und/oder zusammenpassenden, ineinanderpassenden Abschnitte in der Weise vorgesehen ist, daß mit den Gleitstücken in geschlossener Stellung die Öffnung (52) im überlappenden und/oder ineinanderpassenden Abschnitt des einen Gleitstückes durch den überlappenden und/oder ineinanderpassenden Abschnitt des anderen Gleitstückes geschlossen ist und so wie sich die Gleitstücke voneinander weg in Richtung der offenen Stellung bewegen der überlappende und/oder ineinanderpassende Abschnitt des anderen Gleitstückes fortschreitend die Öffnung (52) im überlappenden und/oder ineinanderpassenden Abschnitt des einen Gleitstückes freigibt.

2. Durchflußregelventil nach Anspruch 1, dadurch gekennzeichnet, daß die Regelöffnung ein verlängerter Schlitz (52) in einem der Gleitstücke ist und durch den überlappenden Abschnitt (50) und/oder durch den komplementären Vorsprung (54) in dem anderen der Gleitstücke zu verschließen und zu öffnen ist.

3. Durchflußregelventil nach Anspruch 1 oder 2, dadurch gekennzeichnet, daß eine Ausgangsbüchse (43) in dem Strömungsdurchgang stromabwärts von und benachbart zu dem Paar der Gleitstücken entfernbar befestigt ist, um zur Zentrierung der Strömung stromabwärts der Öffnung zu wirken.

4. Durchflußregelventil nach Anspruch 1, dadurch gekennzeichnet, daß die Regelöffnung vollständig in einem der Gleitstücke enthalten ist.

5. Durchflußregelventil nach Anspruch 3, dadurch gekennzeichnet, daß Führungen (32) im Körper (12) die Gleitstücke durch gemeinsam wirkende Zungen (30) und Schlitze (34, 36) tragen und daß ein Raum (38) zwischen den Führungen (32) im Strömungsdurchgang vorgesehen ist, wodurch das Schließen der Gleitstücke jede Bildung von Feststoffen in den Gleitstücken entfernt.

6. Durchflußregelventil nach Anspruch 5, dadurch gekennzeichnet, daß die Führungen eine getrennte Führung für jedes der Gleitstücke umfassen.

7. Durchflußregelventil nach Anspruch 5, dadurch gekennzeichnet, daß die Öffnungsplatte (18), die Führungen (32) und die Ausgangsbüchse (43) alle lösbar befestigt sind, daß eine Kammer (16) innerhalb des Körpers eine Öffnung (20) einer Größe aufweist, die ausreichend ist, um die Führungen, die Gleitventile, die Ausgangsbüchse und die Ventilöffnung durch diese hindurch zu entfernen und daß eine Abdeckung (22) diese Öffnung lösbar abdeckt.

8. Durchflußregelventil nach Anspruch 7, dadurch gekennzeichnet, daß ein kegelstumpfartiger konischer Abschnitt (46) im Strömungsdurchgang stromaufwärts zu und benachbart zu der Ventilöffnung angeordnet ist, der zur Verhinderung der Bildung von Feststoffen im strom-aufwärtigen Abschnitt des Strömungsdurch-ganges wirkt.

**Revendications**

1. Soupape de réglage de flux (10) comprenant un corps (12) muni d'un passage d'écoulement (14) qui le traverse, une plaque à orifice de soupape (18) fixée de façon amovible dans le passage d'écoulement et deux tiroirs (26, 28) disposés adjacents à et en aval de la plaque à orifice et pouvant respectivement se rapprocher et s'éloigner l'un par rapport à l'autre entre une position fermée et une position ouverte, caractérisée en ce que les tiroirs (26, 28) se chevauchent l'un l'autre et/ou comprennent des parties d'emboîtant l'une dans l'autre et qui sont adaptées l'une à l'autre, et en ce qu'une ouverture de réglage (52) est prévue dans l'une des parties en chevauchement et/ou s'adaptant et s'emboîtant l'une dans l'autre de manière que lorsque lesdits tiroirs sont dans ladite position fermée, l'ouverture (52) de la partie en chevauchement et/ou en emboîtement d'un tiroir soit fermée par la partie en chevauchement et/ou en emboîtement de l'autre tiroir, et que lorsque les tiroirs d'éloignent l'un de l'autre en direction de ladite position ouverte, la partie en chevauchement et/ou en emboîtement dudit autre tiroir expose progressivement l'ouverture (52) de la partie en chevauchement et/ou en emboîtement dudit premier tiroir.

2. Soupape de réglage de flux selon la revendication 1, caractérisée en ce que l'ouverture de réglage est une fente allongée (52) prévue dans l'un des tiroirs et peut être fermée ou ouverte par une partie en chevauchement (50) et/ou par une saillie complémentaire (54) de l'autre des tiroirs.

3. Soupape de réglage de flux selon la revendication 1 ou la revendication 2, caractérisée en ce qu'une chemise de sortie (43) est fixée de façon amovible dans le passage d'écoulement en aval ou en un endroit adjacent aux deux tiroirs, apte à centrer l'écoulement en aval de l'orifice.

4. Soupape de réglage de flux selon la revendication 1, caractérisée en ce que l'ouverture de réglage est complètement comprise dans l'un des tiroirs.

5. Soupape de réglage de flux selon la revendication 3, caractérisée en ce que des guides (32) du corps (12) supportent le tiroir par des languettes (30) et des fentes (34, 36) et en ce qu'un espace (38) est prévu entre les guides (32) dans le passage d'écoulement, de manière que la fermeture des tiroirs élimine toute accumulation de corps solides dans les guides.

6. Soupape de réglage de flux selon la revendication 5, caractérisée en ce que les guides comprennent un guide séparé pour chacun des tiroirs.

7. Soupape de réglage de flux selon la revendication 5, caractérisée en ce que la plaque à orifice (18), les guides (32) et la chemise de sortie (43) sont tous fixés en place de façon amovible, en ce qu'une chambre (16) dans le corps comprend une ouverture (20) de dimension suffisante pour le retrait par celle-ci des guides, des tiroirs, de la chemise de sortie et de l'orifice de soupape, et en ce qu'un couvercle (22) recouvre l'ouverture de façon amovible.

8. Soupape de réglage de flux selon la revendication 7, caractérisée en ce qu'une section tronconique (46) est disposée dans le passage d'écoulement en amont et en un endroit adjacent à l'orifice de la soupape, apte à éviter une accumulation de corps solides dans la partie amont du passage d'écoulement.

Fig. 1

0 080 370

Fig. 1A

*Fig. 2*

26

52

50

48

30

28

30

*Fig. 2A*

26

52

14

50

28

Fig. 3

Fig. 3A

Fig. 4

*Fig. 5*

*Fig. 5A*

*Fig. 5B*

*Fig. 5C*

0 080 370

Fig. 6

Fig. 6A

Fig. 6B

6